# EUROPÄISCHE PATENTSCHRIFT

(11) **EP 1 864 361 B1**
(45) Veröffentlichungstag und Bekanntmachung des Hinweises auf die Patenterteilung: **06.12.2017**
(21) Anmeldenummer: 05716161.4
(22) Anmeldetag: 17.03.2005
(51) Int. Cl.: H02B 1/20

(54) **SCHALTSCHRANK- ODER RACKANORDNUNG**
SWITCHGEAR CABINET ASSEMBLY OR RACK ASSEMBLY
ENSEMBLE ARMOIRE ELECTRIQUE OU ENSEMBLE CHASSIS

(43) Veröffentlichungstag der Anmeldung: 12.12.2007
(73) Patentinhaber: Rittal GmbH & Co. KG, 35745 Herborn (DE)
(72) Erfinder: STRACKBEIN, Heinrich, 35444 Biebertal (DE); DAHMER, Ralf, 57462 Olpe (DE); HAIN, Markus, 35684 Dillenburg (DE); KREILING, Jörg, 35444 Bieberteil (DE); LOHREY, Hartmut, 35410 Hungen (DE)
(74) Vertreter: Angerhausen, Christoph
(86) Internationale Anmeldenummer: PCT/EP2005/002857
(87) Internationale Veröffentlichungsnummer: WO 2006/097127

(56) Entgegenhaltungen:
- DE-A1- 4 210 657
- FR-A- 2 467 498
- US-A- 5 934 096
- US-A1- 2002 070 610
- US-B1- 6 628 009

## Beschreibung

Die Erfindung geht aus von einer Schaltschrank oder Rackanordnung mit einer an eine Hauptstromversorgung anschliessbaren Elektrifiziereinrichtung, an die in mindestens einem anwenderseitigen Schaltschrank (22) oder Rack untergebrachte, zu versorgende Geräte anschliessbar sind, wobei in dem mindestens einen anwenderseitigen Schaltschrank oder Rack oder in einem separaten Schrank oder Rack eine Unterverteilungsvorrichtung mit einer an die Hauptstromversorgung anschließbaren, ein eigenes Gehäuse oder einen eigenen Rahmen aufweisenden ersten Unterverteilungseinheit angeordnet und mittels einer Montageeinheit gehalten und gesichert ist, wobei die erste Unterverteilungseinheit einerseits an zu der Hauptstromversorgung führenden Hauptversorgungsleitungen anschließbar ist und andererseits mit zu den zu versorgenden Geräten führenden vorkonfektionierten Anschlussleitungen verbindbar ist, wobei mindestens eine zweite Unterverteilungseinheit mittels Kupplungs-/Steckereinheiten direkt oder über vorkonfektionierte Kabel mit der ersten Unterverteilungseinheit verbunden oder verbindbar ist, wobei nur eine der Unterverteilungseinheiten mit der Hauptstromversorgung verbunden ist.

Eine derartige Anordnung mit Elektrifiziereinrichtung ist aus der US 2002/0070610 A1 bekannt. Weitere Elektrifizieranordnungen werden in den Druckschriften US 6,628,009 B1, DE 42 10 657 A1, US 5,934,096 und FR 2 467 498 offenbart.

Eine weitere Schaltschrankanordnung mit einer Elektrifiziereinrichtung ist in der DE 199 11 196 A1 gezeigt, wobei von einer Elektrifiziereinrichtung aus verschiedene in einem Schaltschrank angeordnete Geräte mit Strom speisbar sind. Andererseits weist die Elektrifiziereinrichtung auch einen Anschluss zu einer Hauptstromversorgung auf. Sind beispielsweise in einem Rechenzentrum vielfältige Verbraucher nicht nur innerhalb eines Schaltschranks oder Racks sondern gegebenenfalls auch in weiteren Schaltschränken oder Racks vorhanden, bedarf es aufwändiger elektrischer Installationsmaßnahmen, wobei die Anschlüsse zumindest gro-ßenteils von einem Fachmann hergestellt werden müssen.

In der DE 298 13 657 U1 ist ein Rack in Form eines Tower-Gestells für Server-PCs gezeigt. Im unteren Bereich des Gestells ist eine Stromversorgungsvorrichtung mit in einer horizontalen Reihe nebeneinander liegenden Stromversorgungsmoduln und einem diese speisenden Unternetzverteiler angeordnet, dem über ein Versorgungskabel von außen Strom zugeführt wird. Die Stromversorgungsmoduln sind zieh- und steckbar in Einschubschächten des Gestells eingebracht und über ein jeweiliges Stromkabel, das durch einen unteren länglichen Hohlraum geführt ist, im Anschlussbereich mit dem Unternetzverteiler elektrisch verbunden. Über eine Verbindung der Stromversorgungsmoduln untereinander sind keine Aussagen gemacht und zum Anschluss der Geräte sind keine näheren Ausführungen gemacht.

In der DE 297 16 201 U1 sind in einem Schaltschrank verschiedene Kontaktiervorrichtungen zum Kontaktieren von Stromschienen und Schaltgeräten gezeigt.

In der DE 25 15 152 ist eine Energieversorgungeinrichtung mit Einschüben und Kontaktapparaten offenbart, wobei die Einschübe verriegelbar und mittels Schaltbetätigung auch elektrisch an- und abschaltbar sind. In der DE 198 26 453 C2 sind zur elektrischen Versorgung in einer Schrankwand eingebaute Durchführungsadapter oder Buchsen gezeigt.

Der Erfindung liegt die Aufgabe zugrunde, eine Schaltschrank- oder Rackanordnung der eingangs genannten Art bereitzustellen, bei der nach hergestelltem Hauptanschluss elektrische Verbraucher, insbesondere zu versorgende Geräte, einfach und variabel auch von einem Laien angeschlossen werden können.

Diese Aufgabe wird mit den Merkmalen des Anspruchs 1 gelöst. Hierbei ist vorgesehen, dass in einer Gehäuse-Seitenwand mindestens einer der Unterverteilungseinheiten eine Aufnahmebuchse zum Aufnehmen eines Steckerelementes der anwenderseitigen Anschlussleitung angeordnet ist, und dass in einer schrankseitig benachbarten Wand oder in einer benachbarten Montageschiene eine Durchführöffnung für das Steckerelement ausgebildet ist. Gleichzeitig wird mit diesen Maßnahmen sicher gewährleistet, dass die betreffende Unterverteilungeinheit nicht versehentlich von der Hauptstromversorgung abgekoppelt und dadurch die Stromversorgung angeschlossener Geräte unterbrochen wird.

Der Benutzer braucht lediglich die Untervereilungseinheit mit dem zugeordneten, mit einer Steckkupplung versehenen Anschluss der Hauptversorgungsleitung zu verbinden und an der Unterverteilungseinheit andererseits die zu den zu versorgenden Geräten bzw. zu den anwenderseitigen Schränken bzw. Racks führenden Anschlussleitungen ebenfalls mit entsprechenden Steckverbindern anzuschließen. Die Unterverteilungseinheit in dem betreffenden Schrank oder Rack bietet dabei vielfältige und variable Anschlussmöglichkeiten, so dass die elektrischen Anschlussarbeiten beispielsweise auch nach einer Umänderung der Anordnung leichtvorgenommen werden können.

Der Anschluss zwischen Hauptstromversorgung und den Unterverteilungseinheiten wird dabei dadurch begünstigt, dass die Hauptversorgungsleitungen ein Netzanschlusskabel und mindestens ein Versorgungskabel oder mehrere Versorgungsschienen aufweisen, an die die mindestens eine Unterverteilungseinheit angeschlossen ist. Das Versorgungskabel kann dabei Teil des Netzanschlusskabels sein.

Ein für die Montage günstiger Aufbau besteht ferner darin, dass die Unterverteilungseinheiten mit Kontaktklemmen zum Anschluss an den Versorgungsschienen oder mit Steckverbindereinheiten zum Anschluss an dem mindestens einen Versorgungskabel versehen sind.

Werden mehrere Unterverteilungseinheiten untereinander mittels vorkonfektionierter Verbindungskabel oder ähnlicher Brücken verbunden, wobei sie mit entsprechenden Steckanschlüssen versehen sind, braucht nur eine der Unterverteilungseinheiten an die Hauptstromversorgung angeschlossen zu werden.

Ein Schutz des Benutzers wird dabei dadurch gewährleistet, dass die Versorgungsschienen oder Versorgungskabel mittels eines Berührungsschutzes berührungssicher abgedeckt sind.

Ist vorgesehen, dass die Unterverteilungseinheiten mit in Sicherungssteckplätzen eingesteckten Sicherungen und mit diesen jeweils abgesicherten Steckverbindungen zum Anschließen der anwenderseitigen Anschlussleitungen versehen sind, wird der Aufbau weiter vereinfacht, wobei in den anwenderseitigen Schränken bzw. Racks entsprechende Sicherungen entfallen können.

Die Montagearbeiten werden weiter dadurch erleichtert, dass in dem mindestens einen anwenderseitigen Schaltschrank oder Rack eine oder mehrere Profilleisten mit darin berührungssicher geführten Stromleitern angeordnet ist/sind, die über variabel anschließbare Adaptereinheiten zum Anschließen der zu versorgenden Geräte zugänglich sind. Auf diese Weise ist nicht nur die Anbindung der Anschlussleitungen in den einzelnen anwenderseitigen Schränken oder Racks einfach, da ein Anschluss pro Profilleiste genügt, sondern der Benutzer kann innerhalb des Schranks den Anschluss der Geräte an geeigneter Stelle ungehindert vornehmen.

Um auf einfache Weise auch bei Ausfall einer Netzstromversorgung die Stromversorgung der Verbraucher sicher zu stellen, ist vorteilhaft vorgesehen, dass in dem Schrank oder Rack mit der Unterverteilungsvorrichtung als eine Hauptstromversorgung eine unterbrechungsfreie Stromversorgungseinrichtung vorhanden ist, an die die Unterverteilungsvorrichtung angeschlossen oder auf die sie automatisch umschaltbar ist, wenn ein Ausfall der Netzversorgung mittels einer Überwachungseinrichtung festgestellt wird.

Eine einfache, übersichtliche Kabelführung wird dadurch erreicht, dass die anwenderseitigen Schränke und/oder der Unterverteilerschrank oder gegebenenfalls die Racks am Sockelbereich oder im Dachbereich rückseitig oder frontseitig mit einem Kabelkanal für die Anschlussleitungen versehen sind und dass an dem jeweiligen Schaltschrank oder Rack eine abnehmbare Blende zum Einführen der Anschlussleitungen vorgesehen ist.

Zur Sicherheit der Elektrifiziereinrichtung mit der Möglichkeit, Überlastungen zu vermeiden und dem Benutzer Informationen anzuzeigen, tragen die Maßnahmen bei, dass eine Abgriffeinheit zur Messung und Überwachung des über die Anschlussleitungen zugeführten Stroms oder der Spannung vorhanden ist. Hierdurch können dem Benutzer auch noch freie Kapazitäten oder erforderliche Erweiterungen des Versorgungssystems angezeigt werden.

Zu einer zusätzlichen Sicherheit und Gewährleistung der Funktionsfähigkeit tragen die Maßnahmen bei, dass eine Sicherheitsvorrichtung vorgesehen ist, die derart ausgebildet ist, dass ein Einstecken oder Herausziehen der Unterverteilungseinheit unter elektrischer Last vermieden ist.

Eine vorteilhafte Sicherheitsvorrichtung besteht darin, dass die Sicherheitsvorrichtung eine mit einer Verriegelung der Unterverteilungseinheit zusammenwirkende Schalteranordnung zum Abschalten der Last aufweist.

Die Erfindung wird nachfolgend anhand von Beispielen unter Bezugnahme auf die Zeichnungen näher erläutert. Es zeigen:
Fig. 1 eine Schaltschrankanordnung mit einer Elektrifiziereinrichtung in schematischer Darstellung,
Fig. 2A und 2B zwei alternative Ausgestaltungen zum Anschluss von Unterverteilungseinheiten an eine Hauptstromversorgung,
Fig. 3A und 3B ein Beispiel für den Anschluss von Unterverteilungseinheiten an eine Hauptstromversorgung und von Unterverteilungseinheiten untereinander,
Fig. 4A und 4B ein weiteres Beispiel für den Anschluss von Unterverteilungseinheiten an eine Hauptstromversorgung und untereinander,
Fig. 5 eine Schaltschrankanordnung mit einer Elektrifiziereinrichtung in perspektivischer Darstellung,
Fig. 6 eine Unterverteilungseinheit mit verschiedenen Komponenten in schematischer Ansicht,
Fig. 7 zwei miteinander elektrisch verbundene Unterverteilungseinheiten mit verschiedenen Komponenten in schematischer Ansicht,
Fig. 8 einen Sockelbereich eines Schaltschranks mit Kabelkanälen,
Fig. 9 einen Dachbereich eines Schaltschranks mit Kabelkanälen,
Fig. 10 eine weitere schematische Darstellung einer Schaltschrankanordnung mit einer Unterverteilungseinheit,
Fig. 11 ein weiteres Beispiel für eine Schaltschrankanordnung mit mehreren Unterverteilungseinheiten, die an verschiedene Hauptversorgungen angeschlossen sind,
Fig. 12 ein weiteres Beispiel für eine Schaltschrankanordnung mit einer Unterverteilungseinheit,
Fig. 13 ein Beispiel einer Schaltschrankanordnung mit einer Unterverteilungseinheit und einer in den einzelnen Schränken angeordneten unterbrechungsfreien Stromversorgung,
Fig. 14 eine Überwachungsanordnung für die Elektrifiziereinrichtung in einer Unterverteilungseinheit,
Fig. 15 eine Überwachungseinrichtung für die Elektrifiziereinrichtung im Bereich einer an die Hauptversorgung angeschlossenen Einspeiseeinheit,
Fig. 16 eine schematische Darstellung einer Überwachungsanordnung im Bereich der Elektrifiziereinrichtung,
Fig. 17 einen Ausschnitt eines Schaltschrankes oder Racks mit einer eingesetzten Unterverteilungseinheit in perspektivischer Ansicht,
Fig. 18 einen Anschlussbereich einer Unterversorgungseinheit an einer Versorgungsschiene in seitlicher Ansicht,
Fig. 19 eine schematische Darstellung einer Unterverteilungseinheit von vorn und in einem eingesetzten Zustand von oben und
Fig. 20 einen seitlichen Bereich einer Unterversorgungseinheit mit einem Anschlussabschnitt.

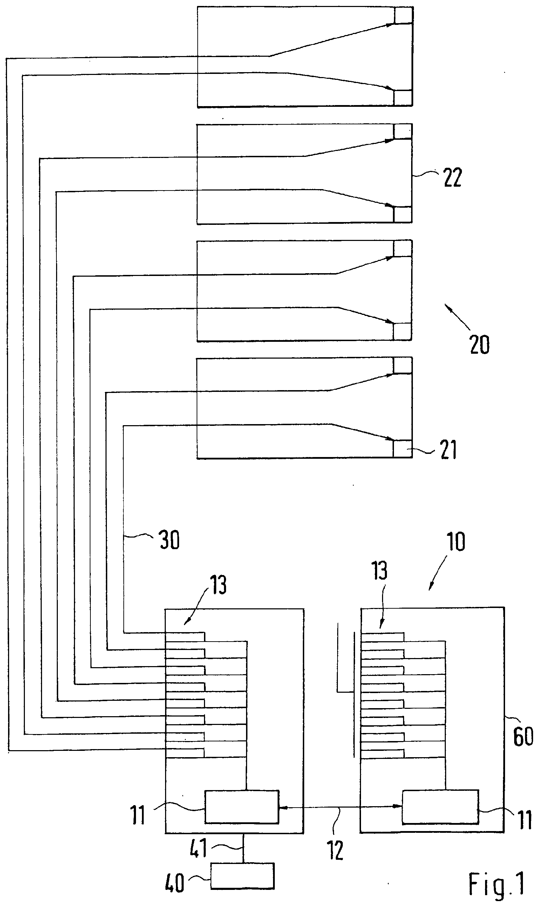

Eine in Fig. 1 gezeigte Schaltschrankanordnung mit einer Elektrifiziereinrichtung weist zwei Unterverteilungsschränke 60, in denen eine Unterverteilungsvorrichtung 10 mit Unterverteilungseinheiten 11 angeordnet ist, und an die Unterverteilungsvorrichtung 10 über Anschlussleitungen 30 angeschlossene anwenderseitige Schränke 20 mit Abnehmerschienen 21 beispielsweise in Form von Profilleisten auf, an die in den betreffenden anwenderseitigen Schränken 22 untergebrachte zu versorgende Geräte anschließbar sind. Die Unterverteilungsvorrichtung 10 ist über ein Netzanschlusskabel 41 an eine Netzversorgung 40 angeschlossen. Die in den beiden Unterverteilerschränken 60 vertikal übereinander angeordneten horizontal ausgerichteten Unterverteilungseinheiten 11 sind über eine Verbindungsleitung 12 miteinander verbunden. Mechanisch sind die Unterverteilungseinheiten 11 mit einer jeweiligen Montageeinheit in dem jeweiligen Unterverteilerschrank 60 gehalten und gesichert. Die Montageeinheit weist dazu mit einem Rahmengestell des Schranks unmittelbar oder über Montageschienen und weitere Montageelemente verbindbare Montageteile auf, an denen die Unterverteilungseinheiten 11 mit an ihnen befindlichen Gegenelementen festlegbar sind. Vorteilhaft umfassen die Montageteile jeweilige horizontale Schienenelemente, über die die zugeordneten Unterverteilungseinheiten 11 einschiebbar sind. Zum Sichern sind Schrauben und oder Rastverbindungselemente oder von Hand betätigbare andere Verriegelungselemente vorgesehen. Die Unterverteilungseinheiten sind vorteilhaft als Einschubeinheiten ausgebildet. Entsprechend kann mindestens eine Unterverteilungseinheit 11 in einem anwenderseitigen Schrank 20 untergebracht und montiert sein.

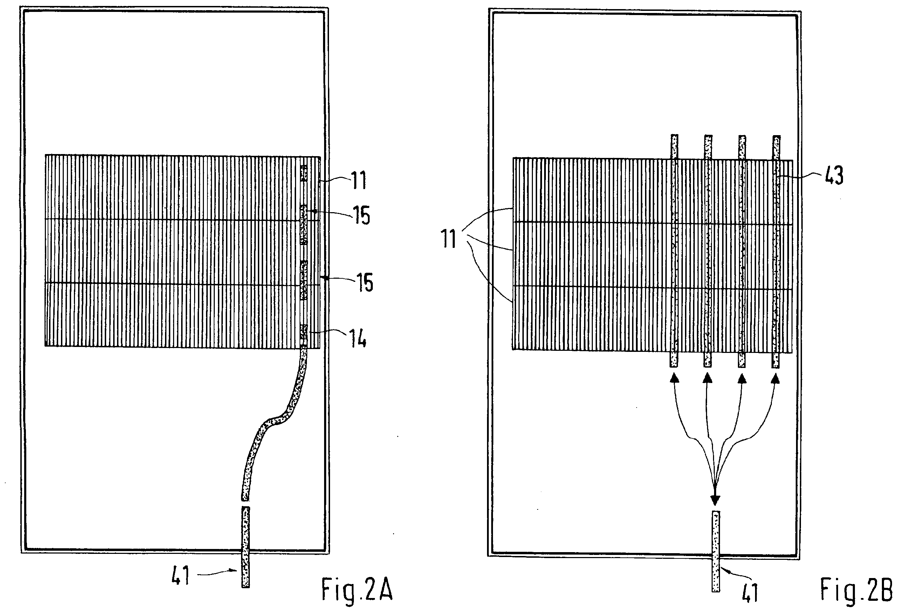

Wie aus den Fig. 2A und 2B ersichtlich, sind mehrere Unterverteilungseinheiten 11 entweder über ein Kabel bzw. direkt mit dem Netzanschlusskabel 41 verbunden (Fig. 2A), wobei nur eine Unterverteilungseinheit 11 an das Netzanschlusskabel 41 angeschlossen ist, während die weiteren Unterverteilungseinheiten 11 wiederum an die mit dem Netzanschlusskabel 41 verbundene Unterverteilungseinheit mittels vorkonfektionierter Anschlusskabel und an den Unterverteilungseinheiten 11 angeordneter Steckeraufnahmen angeschlossen sind, oder das Netzanschlusskabel 41 ist mit Versorgungsschienen 43 verbunden, an die die Unterverteilungseinheiten 11 angeschlossen sind.

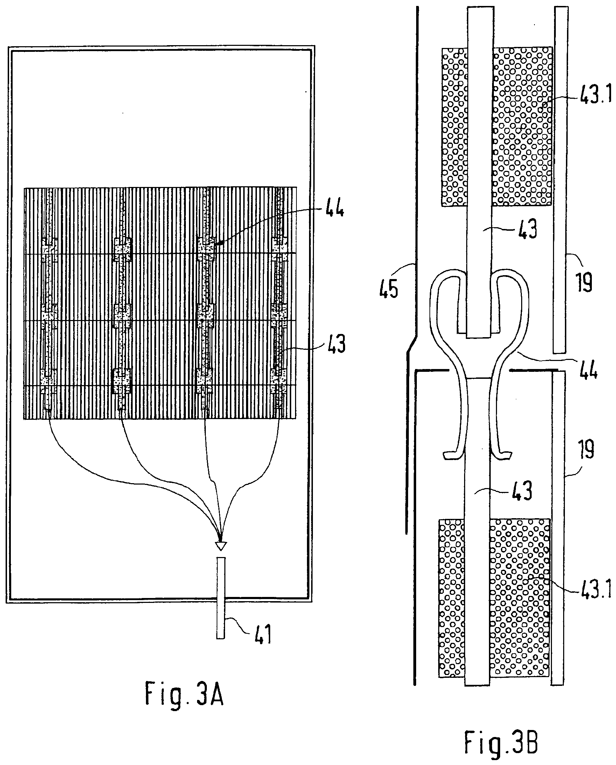

Beim Anschluss der betreffenden Unterverteilungseinheiten 11 mit einem Versorgungskabel 42 ist vorteilhaft, dass die Verbindung mittels einer einfachen Steckverbindung vorgenommen werden kann, während die Stromschienen höhere Stromstärken von z.B. über 100 Ampere zulassen. Insbesondere die Stromschienen müssen mittels eines Berührungsschutzes 45 (vgl. Fig. 3B) berührungssicher abgedeckt sein. Die Stromschienen, z.B. ein vierpoliges Schienensystem, sind beispielsweise senkrecht montiert. An der Front des Berührungsschutzes 45, das z.B. aus einem Kunststoffgehäuse gebildet ist, befinden sich Bohrungen, durch die die Unterverteilungen 11 über Kontaktklammern mit den Stromschienen 43 verbunden sind. Die Unterverteilungseinheiten 11, die vorzugsweise in einem 19-Zoll-Gehäuse oder -Rahmen gehalten sind, werden nach Einschieben mit den Kontaktklammern fixiert.

Bei dem in den Fig. 3A und 3B gezeigten Beispiel sind an der Rückseite der Unterverteilungseinheiten 11 Stromschienenabschnitte berührungssicher angebracht. An den Stromschienenabschnitten 43 befinden sich am unteren Ende Kontaktklemmen 44, die mit den Stromschienenabschnitten einer schon montierten Unterverteilungseinheit 11 durch Zusammenstecken kontaktieren. Beim Zusammenstecken ist durch den Berührungsschutz 45 bzw. die Verkleidungen der Schienen 43 immer die Berührungssicherheit gewährleistet. Die Einspeisung in die Stromschienen 43 erfolgt über ein spezielles Modul, das vorzugsweise an unterster Stelle montiert ist. Die Stromschienenabschnitte der untersten Unterverteilungseinheit 11 werden über die Kontaktklemmen 44 mit den Stromschienenabschnitten des Einspeisemoduls verbunden.

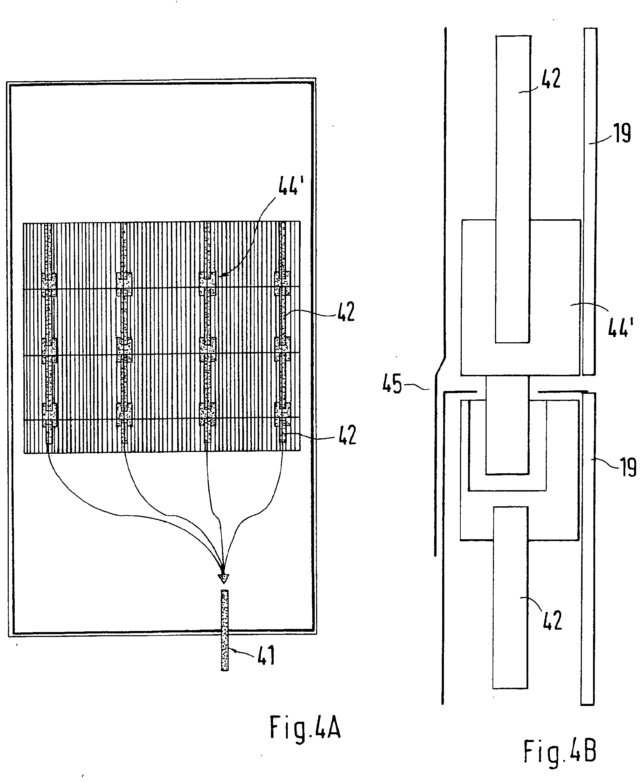

Bei dem Beispiel gemäß den Fig. 4A und 4B werden auch bei einem Anschluss über Versorgungskabel 42 die Unterverteilungseinheiten 11 über Steckverbindereinheiten 44' aus Stecker und Buchsen durch Zusammenstecken direkt miteinander verbunden. In die Steckverbindung der untersten Unterverteilungseinheit passt der Stecker des Netzanschlusskabels 41. Bei dieser Ausgestaltung werden keine Brückenkabel zwischen den Unterverteilungseinheiten 11 benötigt.

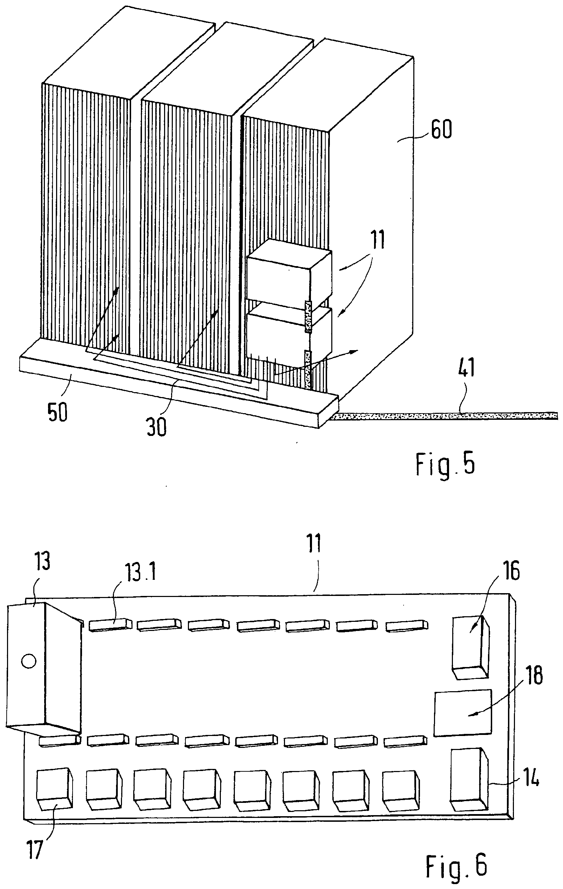

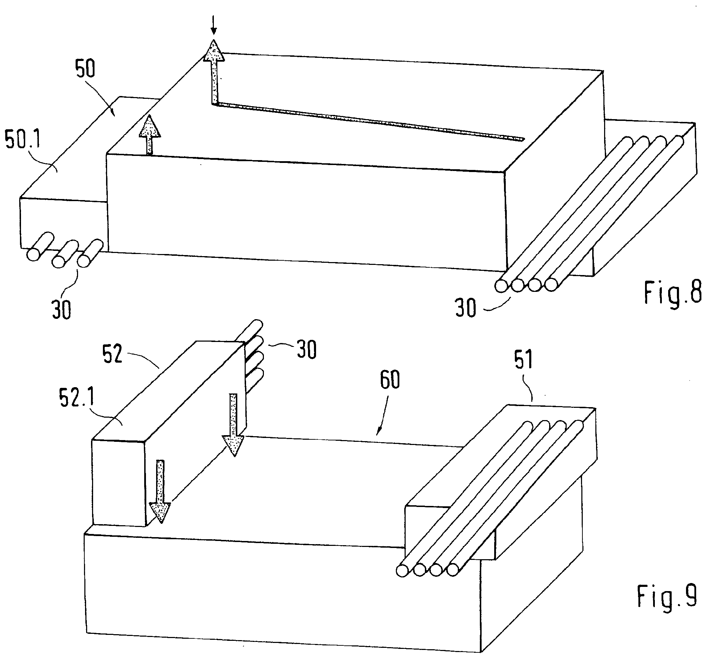

Wie Fig. 5 schematisch zeigt, werden die Anschlussleitungen 30 von den ebenfalls im Schrank 60 angeordneten Unterverteilungseinheiten 11 zu den anwenderseitigen Profilleisten 21 durch im Sockelbereich auf der Vorderseite oder Rückseite der Anwenderschränke 22 angeordnete Kabelkanäle 50 geführt, die eine fortlaufende Kabelkanalanordnung bilden. Wie Fig. 8 zeigt, kann der Kabelkanal 50 mittels einer Kabelkanalabdeckung 50.1 abgedeckt sein. Der Kanal kann z.B. abnehmbar vor oder hinter dem Sockel des jeweiligen Schranks 22 oder entsprechend auch des Schrankes 60 befestigt sein. Wie Fig. 9 zeigt, kann alternativ oder zusätzlich auch im Dachbereich des betreffenden Schranks 22, 60 ein Kabelkanal 51, 52 gegebenenfalls mit einer Kabelkanalabdeckung 52.1 angeordnet sein, der ebenfalls abnehmbar ausgebildet sein kann. Die Abdeckung kann als über die gesamte Länge reichende Klappe ausgeführt sein, die mit einem Werkzeug geöffnet werden kann. Die Anschlussleitungen bzw. Kabel 30 werden an mehreren Punkten in dem Kabelkanal 50 bzw. 51, 52 fixiert.

Bei der Anordnung des Kabelkanals 50 am Sockel wird eine Blende entfernt und gegebenenfalls durch eine Blende mit einem Ausschnitt ersetzt. Der Kabelkanal 50 enthält auf der Rückseite einen passenden Ausschnitt, der sich mit dem Ausschnitt der Blende deckt.

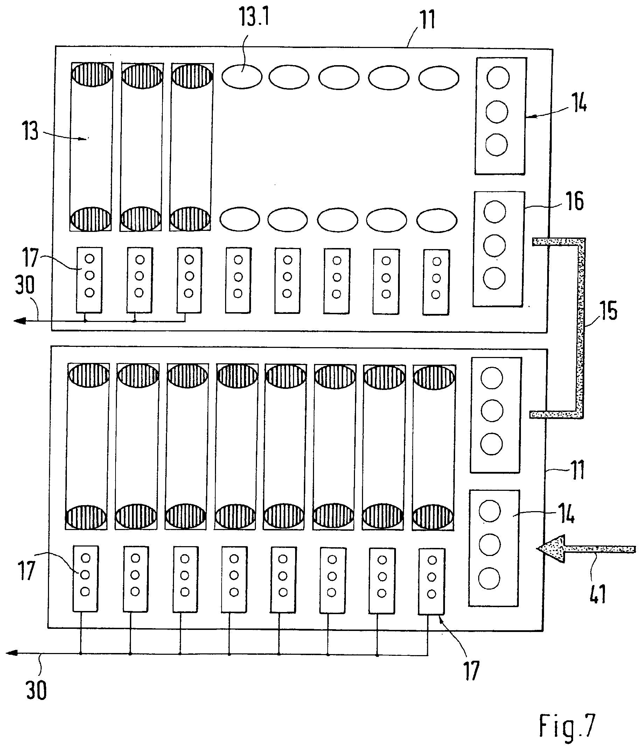

Wie aus den Fig. 6 und 7 ersichtlich, weisen die Unterverteilungseinheiten 11 in Sicherungssteckplätze 13.1 eingesteckte Sicherungen 13 auf, so dass an jeweiligen Steckverbindungen 17 für die Anschlussleitungen 30 jeweils schon Absicherungen gegen übermäßige Ströme getroffen sind, so dass sich entsprechend weitere Sicherungen in den anwenderseitigen Schränken 22 erübrigen. Ferner ist die Unterverteilung 11 mit Steckeraufnahmen oder Buchsen 14, 16 zum Verbinden untereinander bzw. mit dem Netzanschlusskabel 41 versehen. Fig. 7 zeigt eine Brücke 15 zwischen zwei Unterverteilungseinheiten 11, die beispielsweise als kurzes Kabel mit zwei Steckverbindern ausgeführt sein kann, wie vorstehend beschrieben.

Ferner ist in der Unterverteilungseinheit 11 eine Überwachungselekektronik 18 angeordnet. Die Unterverteilungseinheiten können, wie aus den Figuren 3B, 4B ersichtlich, auf entsprechenden Montageplatten 19 angeordnet sein, auf denen auch Versorgungsschienenabschnitte43 mittels entsprechender Versorgungsschienenhalterungen 43.1 angebracht sind.

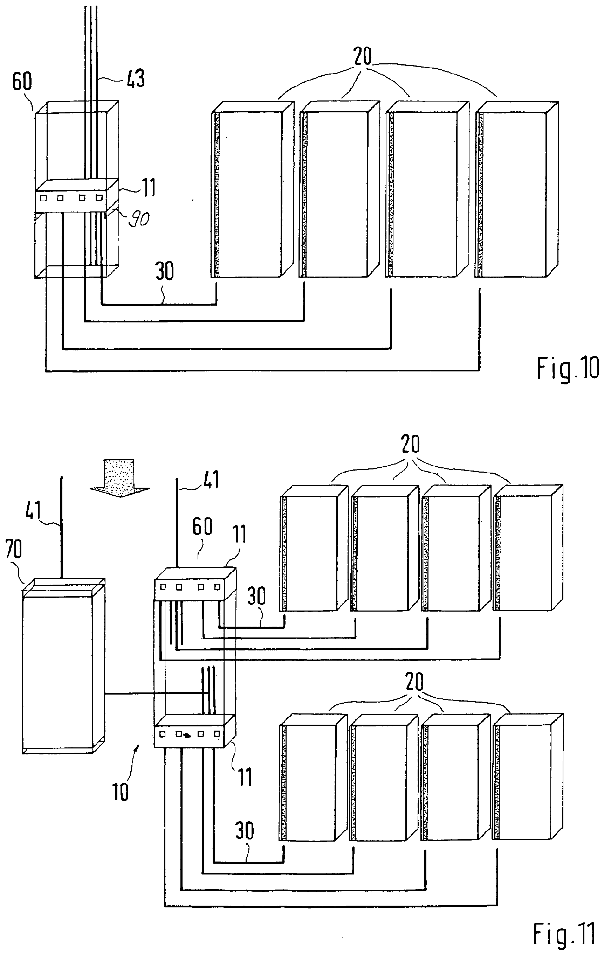

Ergänzend zur Netzversorgung 40 ist vorteilhaft auch eine unterbrechungsfreie Stromversorgung (USV) vorgesehen, auf die die mit der Netzversorgung 40 verbundene Unterverteilungseinheit 11 umgeschaltet wird, wenn ein Netzspannungsausfall mittels einer entsprechenden Detektoreinheit festgestellt wird, oder an die eine andere Unterverteilungseinheit 11 von vornherein angeschlossen ist, wie in Fig. 11 gezeigt. Bei der z.B. modular aufgebauten unterbrechungsfreien Stromversorgung 70, die also auch die Hauptversorgung bilden kann, ist die Elektronik z.B. getrennt von Versorgungsakkus in einem Gehäuse untergebracht, das beispielsweise ebenfalls als 19-Zoll-Einbau entsprechend der Unterverteilungseinheit 11 untergebracht ist, während die Versorgungsakkus in einer oder mehreren Einheiten in den Abnehmerschienen bzw. Profilleisten 21 installiert werden können. Zur Kühlung ist vorteilhaft eine Wasserkühlung gewählt, bei der Kühlelemente an den einzelnen Bauteilen von Wasser durchflossen werden. Die Kühlelemente sind mit Schläuchen und Steckverbindern zum Zuführen gekühlten und Ableiten erwärmten Wassers verbunden, wobei die Kühlung überwacht und geregelt wird. Die unterbrechungsfreie Stromversorgung ist mittels Steckverbinder mit den Akkus verbunden, die leicht austauschbar sind.

Zum einfachen Anschluss der Geräte sind in die Profilleisten 21 variabel an unterschiedlichen Stellen einsetzbare Adaptereinheiten vorgesehen. Die Stromführung in den Profilleisten 21 erfolgt mittels berührungssicher eingebetteter Stromschienen oder isolierter Kabel.

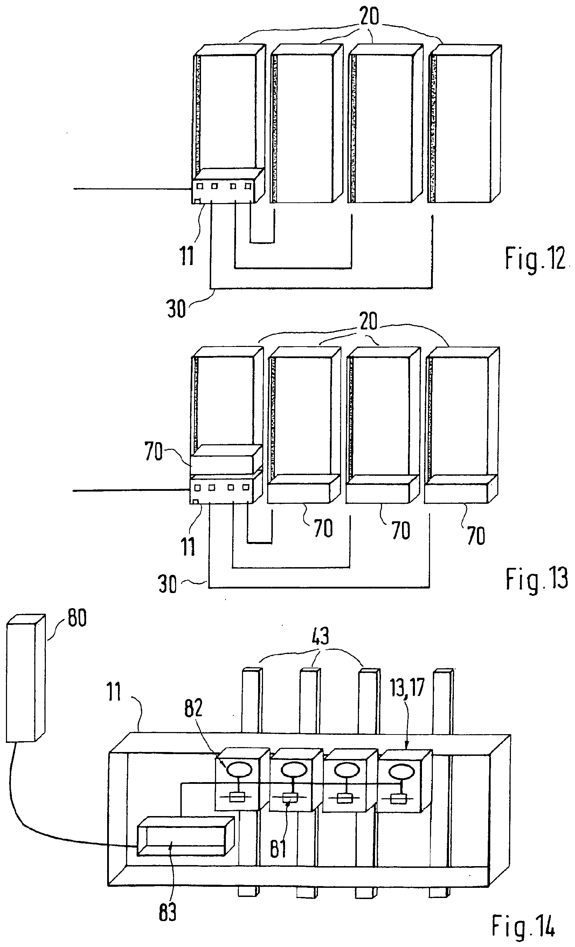

Der über die Anschlussleitungen 30 zugeführte Strom kann an geeigneter Stelle, beispielsweise bereits am Ort der Einspeisung aus der Hauptversorgung, z.B. an einem Einspeisemodul 46, oder in den Unterverteilungen oder am Ort der Einspeisung in die Profilleisten 21 oder innerhalb der Profilleisten 21 gemessen und überwacht werden, wie beispielhaft in den Fig. 14 bis 16 dargestellt. Die Messsignale können dazu benutzt werden, an Ort und Stelle z.B. ein Überlastungssignal auszulösen und den Benutzer zu informieren. Vorteilhaft wird das Messsignal einem übergeordneten Schaltschranküberwachungssystem 80 zugeführt, das die Messsignale genauer auswerten kann und geeignete Daten zum Erzeugen von Informationen und/oder Ansteuersignalen für Aktoren bilden kann. Die Messung des Stroms oder der Spannung erfolgt über Strom- bzw. Spannungswandler, Messumformer und vorteilhafterweise über eine A/D-Wandlung und Weiterleitung der Messsignale über eine serielle Schnittstelle. In ähnlicher Weise können auch die Sicherungen oder Schutzschalter überwacht werden. Die Informationen werden ebenfalls über die serielle Schnittstelle weitergeleitet. Dabei kann die Überwachung über Hilfskontakte an den Schutzschaltern oder auch durch Spannungsmessung vor und hinter der Sicherung erfolgen.

Die beschriebenen Maßnahmen ergeben nicht nur eine leicht zu handhabende, variable elektrische Elektrifiziereinrichtung, sondern gewährleisten auch die für den Benutzer zu fordernde Sicherheit.

Die Fig. 10 bis 13 zeigen verschiedene weitere Beispiele für Schaltschrankanordnungen mit Unterverteilungseinheiten 11. Gemäß Fig. 10 ist eine in einem separaten Unterverteilungsschrank 60 angeordnete Unterverteilungseinheit 11 über Stromschienen mit einer Hauptversorgung gespeist und über Anschlussleitungen 30 an eine Gruppe mit vier anwenderseitigen Schränken angeschlossen. Bei dem Beispiel nach Fig. 11 sind zwei Unterverteilungseinheiten 11 in einem separaten Unterverteilungsschrank 60 angeschlossen, an die zwei Gruppen mit jeweils vier anwenderseitigen Schränken 20 über jeweilige Anschlussleitungen 30 angeschlossen sind. Die eine Unterverteilungseinheit 11 wird dabei z.B. über eine zugeordnete Gruppe von Versorgungsschienen unmittelbar aus einer Netzversorgung als Hauptversorgung gespeist, während die andere Unterversorgungseinheit über andere zugeordnete Versorgungsschienen 43 aus einer unterbrechungsfreien Stromversorgung 70 als Hauptversorgung gespeist ist, die ihrerseits über ein Netzanschlusskabel 41 mit der Netzversorgung verbunden ist. In diesem Ausführungsbeispiel ist die unterbrechungsfreie Stromversorgung 70 in einem eigenen Schrank untergebracht. Denkbar ist es auch, die unterbrechungsfreie Stromversorgung in dem selben Schrank wie die Unterverteilungseinheiten 11 unterzubringen.

Bei dem Beispiel nach Fig. 12 ist eine Unterverteilungseinheit 11 in einem anwenderseitigen Schrank 20 untergebracht und versorgt über jeweilige Anschlussleitungen 30 die weiteren anwenderseitigen Schränke sowie die Abnehmer in dem anwenderseitigen Schrank 20, in dem sie selbst untergebracht ist. Gemäß Fig. 13 sind gegenüber der Anordnung nach Fig. 12 zusätzlich in den einzelnen Schränken unterbrechungsfreie Stromversorgungen 70 untergebracht, an die die in den Schränken befindlichen Verbraucher angeschlossen sind, um die Versorgung im Falle eines Ausfalls der Netzversorgung sicherzustellen.

Bei den Beispielen nach den Fig. 10 bis 13 sind die Unterverteilungen 11 an sich entsprechend den anhand der Fig. 1 bis 9 erläuterten Beispielen aufgebaut und in entsprechender Weise mit der oder den Hauptversorgungen sowie den Abnehmern verbunden.

Fig. 14 zeigt eine Überwachung der Elektrifiziereinrichtung in einer Unterverteilungseinheit 11, die über drei Phasen und einen Nullleiter an eine Hauptversorgung angeschlossen ist. Entsprechend sind für jede Phase und gewünschtenfalls auch den Nullleiter jeweilige Spannungswandler 81 und/oder Stromwandler 82 vorhanden, mit denen entsprechende Messsignale abgegriffen und einer Sensoreinheit 83 zugeführt werden, in der die Strom- und Spannungssignale in geeignete Daten umgewandelt werden und über eine Busverbindung, beispielsweise über eine serielle Schnittstelle, dem übergeordneten Schaltschranküberwachungssystem 80 zugeführt werden. Mit der Sensoreinheit 83 können die betreffenden Phasen unterschieden werden, so dass über das Schaltschranküberwachungssystem 80 eine gezielte Auswertung und erforderlichenfalls ein zugeordnetes Überlastungssignal abgegeben oder eine Abschaltung über Ansteuerung zugeordneter Aktoren vorgenommen werden kann.

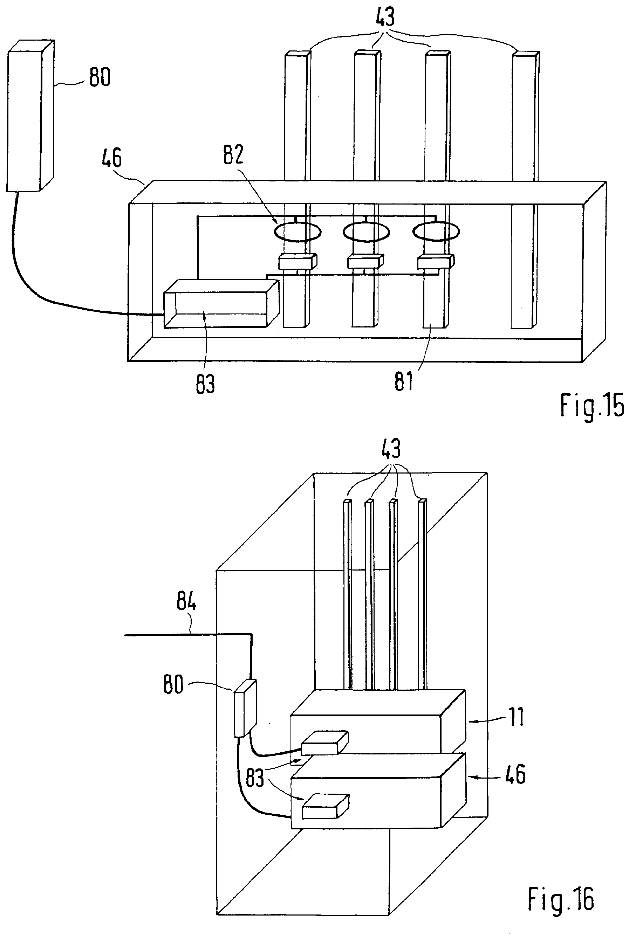

Wie Fig. 15 zeigt, kann eine derartige Überwachungsanordnung mit Stromwandlern 82 und/oder Spannungswandlern 81 sowie einer daran angeschlossenen Sensoreinheit 83 auch in einem Einspeisemodul zur Einspeisung in die zu der oder den Unterverteilungseinheiten 11 führenden Versorgungsschienen 43 oder in das Versorgungskabel 42 vorgenommen werden. Auch hierbei werden die von der Sensoreinheit 83 aufgenommenen Signale von dieser an das Schaltschranküberwachungssystem 80 zur weiteren Auswertung weitergegeben.

Fig. 16 zeigt ein Beispiel bei dem sowohl einer Unterverteilungseinheit 11 als auch einem Einspeisemodul 46 eine Überwachungseinrichtung entsprechend den Beispielen nach den Fig. 14 und 15 zugeordnet ist. Das Schaltschranküberwachungssystem 80 erhält hierbei die Daten beider angeschlossener Sensoreinheiten 83 zur Auswertung und Weiterverarbeitung. Die Daten des Schaltschranküberwachungssystems 80 können in dem Schaltschranküberwachungssystem 80 auch zur Weiterübertragung an entfernte Stellen über ein Netzsystem 84 aufbereitet werden, womit eine Fernüberwachung und Fernsteuerung ermöglicht wird.

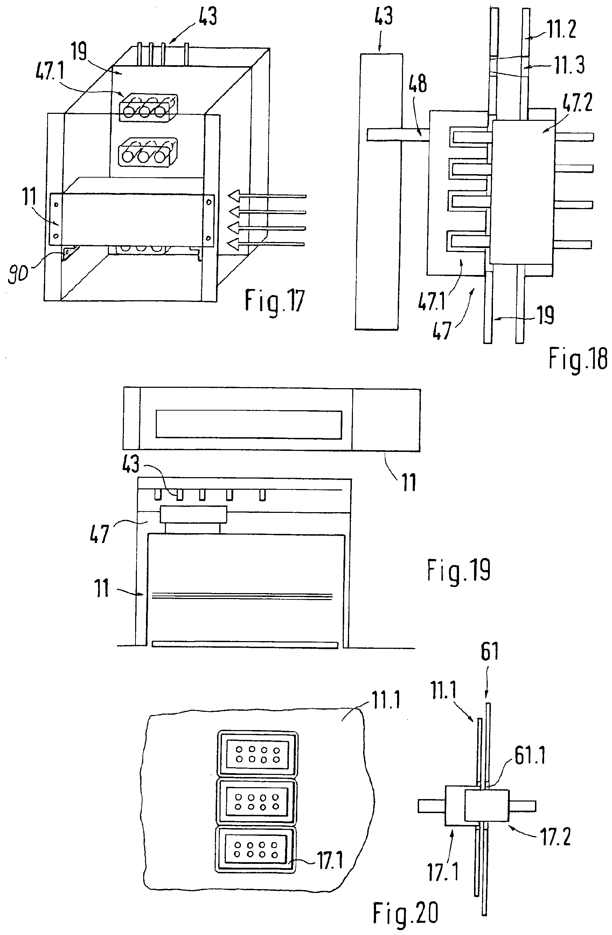

Fig. 17 zeigt eine in das Innere eines Schaltschrankes oder Racks eingesetzte, als z.B. 19"-Einschub ausgebildete Unterverteilungseinheit 11, die mittels einer Montageeinheit 90 mit horizontal in die Tiefe des Schrankes oder Racks verlaufenden seitlichen Schienenelementen oder Montageleisten gehalten ist. In dem Schrankinneren sind an vertikal verlaufenden Versorgungsschienen 43 Buchsen 47.1 für an der Rückseite des Einschubs 11 angeordnete Stecker 47.2 angeordnet. Die Versorgungsschienen 43 sind mittels einer oder mehrerer Montageplatten 19 abgedeckt, durch die lediglich die Buchsen 47.1 mittels der Stecker 47.2 zugänglich sind. Mit dieser Stecker-/Buchseneinheit 47 kann die Unterverteilungseinheit 11 durch Einschieben in den Innenraum des Schranks oder Racks auf einfache Weise und berührungssicher angeschlossen werden, wie auch aus Fig. 18 ersichtlich ist, in der auch ein Anschlussmittel 48 zwischen der Buchse 47.1 und einer Versorgungsschiene 43 dargestellt ist. Der Stecker 47.2 ist in einer Rückwand 11.2 des Gehäuses der Unterverteilungseinheit 11 angeordnet, während die Buchse 47.1 in oder hinter einer Aussparung in der Montageplatte 19 angeordnet ist. Zum eindeutigen Zentrieren der als Einschub ausgebildeten Unterverteilungseinheit 11 ist an der Rückwand 11.2 mindestens ein Zentrierdorn 11.3 angeordnet, der in eine darauf abgestimmte Zentrieröffnung 19.1 in der Montageplatte 19 eingreift. Zum positionsgenauen einfachen geführten Einschieben der jeweiligen Unterverteilungseinheit 11 sind die horizontalen Schienenelemente der Montageeinheit auf die Höhe des Steckers und der Buchse bzw. des Dorns unter Berücksichtigung eines betreffenden Vertikalversatzes abgestimmt. Seitliche Begrenzungen gewährleisten eine genaue Positionierung quer zur Einschubrichtung. Fig. 19 zeigt die in den Innenraum des Schranks oder Racks eingesetzte Unterverteilungseinheit 11 sowie die Stecker-/Buchseneinheit 47 von oben sowie von der Vorderseite. Zum Montieren der Sicherungen oder ähnlicher Schutzelemente kann z.B. eine Hutschienenanordnung im Inneren des Gehäuses vorgesehen sein.

Eine erfindungsgemässe Ausgestaltung der Unterverteilungseinheit 11 im Zusammenhang mit einem Einbaubereich des Schranks oder Racks ist in Fig. 20 dargestellt. In einer Seitenwand 11.1 der als Einschub ausgebildeten Unterverteilungseinheit 11 ist eine Anordnung aus Aufnahmebuchsen 17.1 vorgesehen, in die Steckerelemente 17.2 der anwenderseitigen Anschlussleitung(en) 30 einsteckbar sind. Den Aufnahmebuchsen 17.1 benachbart ist in einer schrankseitigen Wand 61 eine Durchführöffnung 61.1 angeordnet, die sich im eingesetzten Zustand des Einschubs mit der Position der betreffenden Aufnahmebuchse 17.1 deckt. Ist das Steckerelement 17.2 in die Aufnahmebuchse 17.1 eingesteckt, kann der Einschub nicht versehentlich herausgezogen werden. Durch diese Anordnung ist ein sicherer Anschluss bei eindeutigem Sitz der Unterverteilungseinheit 11 gewährleistet und außerdem wird verhindert, dass ein Einstecken bzw. Herausziehen des Einschubs 11 unter Last vorgenommen wird.

Alternativ kann zur Vermeidung eines Einsteckens oder Herausziehens des Einschubs unter Last auch eine Schalteranordnung in der Unterverteilungseinheit 11 vorgesehen sein. Dabei ist die Ausbildung z.B. in der Weise vorgenommen, dass sich auf einer Welle ein Vorreiberhebel befindet, der durch eine Aussparung der Seitenwand 11.1 des Einschubs 11 und der gegenüberliegenden Seitenwand des Einschubs 11 ragt und die Unterverteilungseinheit 11 an der benachbarten Seitenwand des Schrankes oder Racks oder einem anderen schaltschrankfesten oder rackfesten Element verriegelt. Beim Einschalten der Schalteranordnung wird die Verriegelung aktiv, beim Ausschalten ist sie entriegelt. Auch dadurch ist gewährleistet, dass die Unterverteilungseinheit 11 nur im lastfreien Zustand entnommen bzw. eingesteckt werden kann.

## Patentansprüche

1. Schaltschrank oder Rackanordnung mit einer an eine Hauptstromversorgung (40) anschliessbaren Elektrifiziereinrichtung, an die in mindestens einem anwenderseitigen Schaltschrank (22) oder Rack untergebrachte, zu versorgende Geräte anschliessbar sind,
wobei in dem mindestens einen anwenderseitigen Schaltschrank (22) oder Rack oder in einem separaten Schrank (60) oder Rack eine Unterverteilungsvorrichtung (10) mit einer an die Hauptstromversorgung anschließbaren, ein eigenes Gehäuse oder einen eigenen Rahmen aufweisenden ersten Unterverteilungseinheit (11) angeordnet und mittels einer Montageeinheit (90) gehalten und gesichert ist, wobei die erste Unterverteilungseinheit (11) einerseits an zu der Hauptstromversorgung (40) führenden Hauptversorgungsleitungen (41, 42, 43) anschließbar ist und andererseits mit zu den zu versorgenden Geräten führenden vorkonfektionierten Anschlussleitungen (30) verbindbar ist, wobei mindestens eine zweite Unterverteilungseinheit (11) mittels Kupplungs-/Steckereinheiten direkt oder über vorkonfektionierte Kabel mit der ersten Unterverteilungseinheit (11) verbunden oder verbindbar ist, wobei nur eine der Unterverteilungseinheiten (11) mit der Hauptstromversorgung (40) verbunden ist, **dadurch gekennzeichnet, dass** in einer Gehäuse-Seitenwand (11.1) mindestens einer der Unterverteilungseinheiten (11) eine Aufnahmebuchse (17.1) zum Aufnehmen eines Steckerelementes (17.2) der anwenderseitigen Anschlussleitung (30) angeordnet ist, und dass in einer schrankseitig benachbarten Wand oder in einer benachbarten Montageschiene eine Durchführöffnung (16.1) für das Steckerelement (17.2) ausgebildet ist.

2. Schaltschrank oder Rackanordnung nach Anspruch 1, **dadurch gekennzeichnet, dass** die Hauptversorgungsleitungen ein Netzanschlusskabel (41) und mindestens ein Versorgungskabel (42) oder mehrere Versorgungsschienen (43) aufweisen, an die die mindestens eine Unterverteilungseinheit (11) angeschlossen ist.

3. Schaltschrank oder Rackanordnung nach Anspruch 2, **dadurch gekennzeichnet, dass** die Unterverteilungseinheiten (11) mit Kontaktklemmen (44) zum Anschluss an den Versorgungsschienen (43) oder mit Steckverbindereinheiten (44') zum Anschluss an dem mindestens einen Versorgungskabel (42) versehen sind.

4. Schaltschrank oder Rackanordnung nach einem der vorhergehenden Ansprüche, **dadurch gekennzeichnet, dass** mehrere der Unterverteilungseinheiten (11) untereinander entweder mittels vorkonfektionierter Verbindungskabel über eine jeweilige Stecker-/Kupplungseinheit verbunden sind, wobei die Verbindungskabel mit Steck- oder Kupplungselementen versehen sind oder über Verbindungs-Stromschienenabschnitten über Kontaktklemmen (44) miteinander verbunden sind.

5. Schaltschrank oder Rackanordnung nach einem der Ansprüche 2 bis 4, **dadurch gekennzeichnet, dass** die Versorgungsschienen (43) oder Versorgungskabel (42) mittels eines Berührungsschutzes (45) berührungssicher abgedeckt sind.

6. Schaltschrank oder Rackanordnung nach einem der vorhergehenden Ansprüche, **dadurch gekennzeichnet, dass** die Unterverteilungseinheiten (11) mit in Sicherungssteckplätzen (13.1) eingesteckten Sicherungen (13) und mit diesen jeweils abgesicherten Steckverbindungen (17) zum Anschließen der anwenderseitigen Anschlussleitungen (30) versehen sind.

7. Schaltschrank oder Rackanordnung nach einem der vorhergehenden Ansprüche, **dadurch gekennzeichnet, dass** in dem mindestens einen anwenderseitigen Schaltschrank (22) oder Rack eine oder mehrere Profilleisten (21) mit darin berührungssicher geführten Stromleitern angeordnet ist/sind, die über variabel anschließbare Adaptereinheiten zum Anschließen der zu versorgenden Geräte zugänglich sind.

8. Schaltschrank oder Rackanordnung nach einem der vorhergehenden Ansprüche, **dadurch gekennzeichnet, dass** in dem Schrank (60) oder Rack mit der Unterverteilungsvorrichtung (10) als eine Hauptstromversorgung eine unterbrechungsfreie Stromversorgungseinrichtung vorhanden ist, an die die Unterverteilungsvorrichtung (10) angeschlossen ist oder auf die sie automatisch umschaltbar ist, wenn ein Ausfall der Netzversorgung (40) mittels einer Überwachungseinrichtung festgestellt wird.

9. Schaltschrank oder Rackanordnung nach einem der vorhergehenden Ansprüche, **dadurch gekennzeichnet, dass** die anwenderseitigen Schränke (20) und/oder der separate Schrank (60) mit der Unterverteilung oder gegebenenfalls die Racks am Sockelbereich oder im Dachbereich rückseitig oder frontseitig mit einem Kabelkanal (50, 51, 52) für die Anschlussleitungen (30) versehen sind und dass an dem jeweiligen Schaltschrank (20, 60) oder Rack eine abnehmbare Blende zum Einführen der Anschlussleitungen (30) vorgesehen ist.

10. Schaltschrank oder Rackanordnung nach einem der vorhergehenden Ansprüche, **dadurch gekennzeichnet, dass** eine Abgriffeinheit zur Messung und Überwachung des über die Anschlussleitungen (30) zugeführten Stroms oder der Spannung vorhanden ist.

11. Schaltschrank oder Rackanordnung nach einem der vorhergehenden Ansprüche, **dadurch gekennzeichnet, dass** eine Sicherheitsvorrichtung vorgesehen ist, die derart ausgebildet ist, dass ein Einstecken oder Herausziehen der Unterverteilungseinheit (11) unter elektrischer Last vermieden ist.

12. Schaltschrank oder Rackanordnung nach Anspruch 1 oder 11, **dadurch gekennzeichnet, dass** die Sicherheitsvorrichtung eine mit einer Verriegelung der Unterverteilungseinheit zusammenwirkende Schalteranordnung zum Abschalten der Last aufweist.

## Claims

1. A switchgear cabinet or rack assembly, comprising an electricity supply device which can be or is connected to a primary power supply (40), wherein equipment which is to be supplied with power and is housed in at least one switchgear cabinet (22) or rack on the user side is connected to said electricity supply device, wherein a sub-distribution device (10) is arranged in the at least one switchgear cabinet (22) or rack or in a separate cabinet (60) or rack, said device comprising at least one sub-distribution unit (11) which can be connected to the primary power supply, has its own housing or its own frame and is retained and secured by means of a mounting unit (90), wherein the first sub-distribution unit (11) can be connected, on the one hand, to primary supply lines (41, 42, 43) leading to the primary power supply (40) and, on the other hand, to prefabricated connecting lines (30) leading to the equipment to be supplied, wherein at least one second sub-distribution unit (11) is or can be connected by means of coupling/plug units directly or by means of prefabricated cables to the first sub-distribution unit (11), wherein only one of the sub-distribution units (11) is connected to the primary power supply (40), **characterized in that** a receiving socket (17.1) for receiving a plug element (17.2) of the connecting line (30) on the user side is arranged in a housing side wall (11.1) of at least one of the sub-distribution units (11), and that a feed-through opening (16.1) for the plug element (17.2) is constructed in an adjacent wall on the cabinet side or in an adjacent mounting rail.

2. The switchgear cabinet or rack assembly according to claim 1, **characterized in that** the primary supply lines have a power supply cable (41) and at least one supply cable (42) or a plurality of supply rails (43) to which the at least one sub-distribution unit (11) is connected.

3. The switchgear cabinet or rack assembly according to claim 2, **characterized in that** the sub-distribution units (11) are provided with contact terminals (44) for connection to the supply rails (43) or with plug connector units (44') for connection to the at least one supply cable (42).

4. The switchgear cabinet or rack assembly according to one of the preceding claims, **characterized in that** a plurality of the sub-distribution units (11) are connected to one another either by means of prefabricated connecting cables or via a respective plug/coupling unit, wherein the connecting cables are provided with plug or coupling elements or are connected to one another by means of connecting conductor rail sections via contact terminals (44).

5. The switchgear cabinet or rack assembly according to one of claims 2 to 4, **characterized in that** the supply rails (43) or supply cables (42) are covered by means of a contact protection so as to be protected against contact.

6. The switchgear cabinet or rack assembly according to one of the preceding claims, **characterized in that** the sub-distribution units (11) are provided with fuses (13) inserted into fuse insertion locations (13.1) and with plug connections (17) secured thereby in each case for connecting the connecting lines (20) on the user side.

7. The switchgear cabinet or rack assembly according to one of the preceding claims, **characterized in that** one or more profile strips (21) having current conductors guided therein so as to be protected against contact is/are arranged in the at least one switchgear cabinet (22) or rack on the user side, and are accessible by means of variably connectable adapter units for connecting the equipment to be supplied.

8. The switchgear cabinet or rack assembly according to one of the preceding claims, **characterized in that** in the cabinet (60) or rack having the sub-distribution unit (10) as a primary power supply an uninterruptible current supply apparatus is provided, to which the sub-distribution unit (10) is connected or to which this unit can be automatically switched over when a failure of the power supply (40) is detected by means of a monitoring device.

9. The switchgear cabinet or rack assembly according to one of the preceding claims, **characterized in that** the cabinets (20) on the user side and/or the separate cabinet (60) with the sub-distribution or possibly the racks are provided on the base region or in the top region on the rear side or on the front side with a cable channel (50, 51, 52) for the connecting lines (30) and that on the respective switchgear cabinet (20, 60) or rack a removable cover is provided for introducing the connecting lines (30).

10. The switchgear cabinet or rack assembly according to one of the preceding claims, **characterized in that** a pickup unit is provided for measuring and monitoring the current or the voltage delivered via the connecting lines (30).

11. The switchgear cabinet or rack assembly according to one of the preceding claims, **characterized in that** a safety device is provided which is designed in such a way that insertion or removal of the sub-distribution unit (11) under electrical load is prevented.

12. The switchgear cabinet or rack assembly according to claim 1 or 11, **characterized in that** the safety device has a switch assembly which co-operates with a locking means of the sub-distribution unit for switching off the load.

## Revendications

1. Armoire de commande ou agencement de racks avec un dispositif d'électrification pouvant être connecté à une alimentation électrique principale (40), à laquelle peuvent être connectés des appareils à alimenter logés dans au moins une armoire de commande côté utilisateur (22) ou un rack,
moyennant quoi, dans l'au moins une armoire côté utilisateur (22) ou rack, ou dans une armoire séparée (60) ou rack, un dispositif de sous-distribution (10), avec une première unité de sous-distribution (11) comprenant son propre boîtier ou son propre châssis, pouvant être connecté à l'alimentation électrique principale, et est maintenu et fixé au moyen d'une unité de montage (90), la première unité de sous-distribution (11) pouvant être connectée d'une part à des lignes d'alimentation principales (41, 42, 43) conduisant à l'alimentation principale (40) et pouvant être reliée d'autre part avec les lignes de connexion (30) pré-confectionnées conduisant aux appareils à alimenter, au moins une deuxième unité de sous-distribution (11) étant reliée ou pouvant être reliée directement au moyen d'unités de couplage/connecteur, ou par l'intermédiaire de câbles pré-confectionnés, avec la première unité de sous-distribution (11), seule une des unités de sous-distribution (11) étant reliée à l'alimentation principale (40), caractérisé(e) en ce que, dans la paroi latérale du boîtier (11.1) d'au moins une des unités de sous-distribution (11), est disposée une douille de logement (17.1) pour le logement d'un élément de connecteur (17.2) de la ligne de connexion côté utilisateur (30) et en ce que, dans une paroi adjacente côté armoire ou dans un rail de montage adjacent, est réalisée une ouverture de passage (16.1) pour l'élément de connecteur (17.2).

2. Armoire de commande ou agencement de racks selon la revendication 1, caractérisé(e) en ce que les lignes d'alimentation principales comprennent un câble de connexion au réseau (41) et au moins un câble d'alimentation (42) ou plusieurs rails d'alimentation (43), auxquels l'au moins une unité de sous-distribution (11) est connectée.

3. Armoire de commande ou agencement de racks selon la revendication 2, caractérisé(e) en ce que les unités de sous-distribution (11) sont munies de bornes de contact (44) pour la connexion aux rails d'alimentation (43) ou d'unités de connecteurs (44') pour la connexion à l'au moins un câble d'alimentation (42).

4. Armoire de commande ou agencement de racks selon l'une des revendications précédentes, caractérisé(e) en ce que plusieurs des unités de sous-distribution (11) sont reliées entre elles soit au moyen de câbles de connexion pré-confectionnés par l'intermédiaire d'une unité de connecteur/couplage, les câbles de liaison étant munis d'éléments de connexion ou d'éléments de couplage, soit par des portions de rails électriques de liaison par l'intermédiaire de bornes de contact (44).

5. Armoire de commande ou agencement de racks selon l'une des revendications 2 à 4, caractérisé(e) en ce que les rails d'alimentation (43) ou les câbles d'alimentation (42) sont recouverts, afin d'être protégés de tout contact, d'une protection anti-contact (45).

6. Armoire de commande ou agencement de racks selon l'une des revendications précédentes, caractérisé(e) en ce que les unités de sous-distribution (11) sont munies de fusibles (13) insérés dans des emplacements de fusibles (13.1) et de ces connexions ainsi sécurisées (17) pour la connexion des lignes de connexion côté utilisateur (30).

7. Armoire de commande ou agencement de racks selon l'une des revendications précédentes, caractérisé(e) en ce que, dans l'au moins une armoire de commande côté utilisateur (22) ou rack, est/sont disposé(s) une ou plusieurs barres profilées (21) avec des conducteurs électriques guidés avec une protection anti-contact, qui sont accessibles par l'intermédiaire d'unités d'adaptateurs pouvant être connectées de manière variable pour la connexion des appareils à alimenter.

8. Armoire de commande ou agencement de racks selon l'une des revendications précédentes, caractérisé(e) en ce que, dans l'armoire de commande (60) ou le rack, avec le dispositif de sous-distribution (10), se trouve, en tant qu'alimentation principale, un dispositif d'alimentation sans interruption, auquel le dispositif de sous-distribution (10) est connecté ou sur lequel il peut être commuté automatiquement lorsqu'une défaillance de l'alimentation du réseau (40) est détectée au moyen d'un dispositif de surveillance.

9. Armoire de commande ou agencement de racks selon l'une des revendications précédentes, caractérisé(e) en ce que les armoires côté utilisateur (20) et/ou l'armoire séparé (60) avec la sous-distribution ou, le cas échéant, les racks, sont munis, au niveau du socle ou du toit, à l'arrière ou à l'avant, d'une goulotte de câble (50, 51, 52) pour les lignes de connexion (30) et en ce que, au niveau de l'armoire de commande (20, 60) ou du rack correspondant, est prévu un diaphragme amovible pour l'introduction des lignes de connexion (30).

10. Armoire de commande ou agencement de racks selon l'une des revendications précédentes, caractérisé(e) en ce qu'une unité de prise est prévue pour la mesure et la surveillance du courant ou de la tension alimentée par l'intermédiaire des lignes de connexion (30).

11. Armoire de commande ou agencement de racks selon l'une des revendications précédentes, caractérisé(e) en ce qu'un dispositif de sécurité est prévu, qui est conçu de façon à empêcher une insertion ou un retrait de l'unité de sous-distribution (11) sous une charge électrique.

12. Armoire de commande ou agencement de racks selon la revendication 1 ou 11, caractérisé(e) en ce que le dispositif de sécurité comprend un agencement de commutateur interagissant avec un verrouillage de l'unité de sous-distribution, pour la coupure de la charge.
